# EUROPÄISCHE PATENTSCHRIFT

(11) **EP 1 660 354 B1**
(45) Veröffentlichungstag und Bekanntmachung des Hinweises auf die Patenterteilung: **06.02.2008**
(21) Anmeldenummer: 04766539.3
(22) Anmeldetag: 19.08.2004
(51) Int. Cl.: B60R 16/02

(54) **VORRICHTUNG ZUR FAHRERWARNUNG**
DEVICE FOR WARNING THE DRIVER OF A VEHICLE
DISPOSITIF POUR AVERTIR LE CONDUCTEUR D'UN VEHICULE

(30) Priorität: 28.08.2003 DE 10339647
(43) Veröffentlichungstag der Anmeldung: 31.05.2006
(73) Patentinhaber: ROBERT BOSCH GMBH, 70442 Stuttgart (DE)
(72) Erfinder: KNOLL, Peter, 76275 Ettlingen (DE); ENGELSBERG, Andreas, 31141 Hildesheim (DE); MANSTETTEN, Dietrich, 71139 Ehningen (DE); KUSSMANN, Holger, 31180 Giesen (DE); KROEHNERT, Andre, 98693 Unterpoerlitz (DE); PLACKE, Lars, 30463 Hannover (DE); STOERZEL, Marc, 70825 Korntal-Muenchingen (DE); EISENLAUER, Stephan, 71229 Leonberg (DE); SCHWEIGER, Ulrich, 70180 Stuttgart (DE)
(86) Internationale Anmeldenummer: PCT/EP2004/051839
(87) Internationale Veröffentlichungsnummer: WO 2005/023595

(56) Entgegenhaltungen:
- EP-A- 0 443 644
- DE-A- 3 822 119
- DE-A- 4 211 556
- DE-A- 10 039 795
- DE-C- 19 952 854

## Beschreibung

### Stand der Technik

Die Erfindung geht aus von einer Vorrichtung zur Fahrerwarnung nach der Gattung des Hauptanspruchs. Aus der DE 100 39 795 A1 ist bereits ein Verfahren zur Warnung eines Fahrers eines Fahrzeugs bekannt, bei dem von Fahrzeugsensoren eine kritische Situation erfasst wird und eine Aufmerksamkeit des Fahrers ermittelt wird. Eine Warnung vor der kritischen Situation wird in Abhängigkeit von der Aufmerksamkeit des Fahrers ausgegeben. Hierdurch wird erreicht, dass ein Fahrer bei einer niedrigen Aufmerksamkeit gewarnt wird, während er, wenn er hochaufmerksam ist, keine Warnungen vor Gefahren erhält, die er bereits wahrgenommen hat.

Aus der DE 42 11 556 A1, dass als nächstliegender Stand der Technik betrachtet wird, ist ein Verfahren zur fahreradaptiven, situationsspezifischen Modellierung des Autofahrerverhaltens in realer Fahrumgebung bekannt. Die Modellierung erfolgt mittels neuronaler Netze. Das Netz wird dabei über einen Trainingsdatensatz trainiert, der einem vorausgegangenen Fahrabschnitt bei normaler Fahrweise des Fahrers entnommen ist. Ein weiteres Netzpaar kann während der Fahrt auf das aktuelle Fahrverhalten des Fahrers trainiert werden. Durch Beobachten der relativen Häufigkeit einer Abweichung, beispielsweise einer tatsächlichen Zeitreserve von einer festgesetzten Schranke oder durch Vergleich mit auf das aktuelle Fahrerverhalten trainierten Netzen, wird festgestellt, ob das Fahrerverhalten gegenüber dem Fahrernormalverhalten abweicht. Eine Warnausgabe wird angesteuert, wenn eine solche Abweichung längere Zeit festgestellt wird.

### Vorteile der Erfindung

Die erfindungsgemäße Vorrichtung mit den Merkmalen des Hauptanspruchs hat demgegenüber den Vorteil, dass eine Warnung an einen Fahrer erst dann ausgegeben wird, wenn ein Grenzwert für einen sicherheitskritischen Zustand überschritten wird, der in Abhängigkeit von einem gespeicherten Nutzerprofil festgelegt wird. Hierdurch wird einem Fahrer die Möglichkeit gegeben, für ihn geeignete, individuelle Warnschwellen, ab denen er eine Warnung erhalten will, selbst festzulegen.

Hierdurch kann vermieden werden, dass ein Fahrer Warnungen erhält, an denen er nicht interessiert ist. Dies könnte dazu führen, dass der Benutzer die gesamte Warneinrichtung deaktiviert und er dann auch keine Warnungen mehr erhält, wenn Grenzwerte wesentlich überschritten werden und er eine Warnung vor diesem wesentlichen Überschreiten gerne erhalten hätte. Erfindungsgemäß ist eine Rückkopplungseinheit vorgesehen, die nach Ausgabe einer Warnung überprüft, ob der Fahrer auf die Warnung reagiert hat, sodass also der Grenzwert eines sicherheitskritischen Zustandes, dessen Überschreitung detektiert worden ist, nach einem gewissen Zeitraum nicht mehr überschritten wird. Wird der Grenzwert weiterhin überschritten, ist davon auszugehen, dass diese Überschreitung von dem Fahrer bewusst gewünscht ist. Damit kann eine weitergehende Warnung vor einer Überschreitung des Grenzwertes für den sicherheitskritischen Zustand ganz oder teilweise unterbleiben.

Durch die in den Unteransprüchen aufgeführten Maßnahmen sind vorteilhafte Weiterbildungen und Verbesserungen der im Hauptanspruch angegebenen Vorrichtung zur Fahrerwarnung möglich. Besonders vorteilhaft ist, Grenzwerte für sicherheitskritische Zustände des Fahrzeugs, ab denen eine Warnung erfolgen soll, in dem Nutzerprofil unmittelbar abzulegen. Der Fahrer kann somit unmittelbaren Einfluss auf die ausgegebenen Warnungen ausüben. So könnte der Fahrer z.B. einstellen, dass eine Warnung vor einem Spurverlassen erst dann ausgegeben wird, wenn der Fahrer eine Fahrbahnbegrenzungsmarkierung überschritten hat bzw. für eine Abstandswarnung eine Warnung erst dann ausgegeben wird, wenn ein Sicherheitsabstand von einem halben Tachoabstand zu einem vorausfahrenden Fahrzeug um mehr als zwei Meter unterschritten wird.

Ferner ist es besonders vorteilhaft, eine Bewertungseinheit zur Festlegung eines sicherheitskritischen Grenzwerts vorzusehen. Die Bewertungseinheit wertet in dem Nutzerprofil abgelegte Zustände des Fahrzeugs und/oder des Fahrers aus einem vorgegebenen Zeitintervall, zum Beispiel 10 Minuten, vor dem Bewertungszeitpunkt aus. Wird in diesem Bewertungszeitraum festgestellt, dass der entsprechende Grenzwert bereits mehrfach, gegebenenfalls trotz ausgegebener Warnung, überschritten worden ist, so wird der Grenzwert für einen sicherheitskritischen Zustand, ab dem eine Warnung ausgegeben wird, so heraufgesetzt, dass nunmehr keine Warnausgabe mehr erfolgt.

Fährt ein Fahrer zum Beispiel besonders sportlich, indem er relativ knappe Abstände einhält oder stark beschleunigt bzw. abbremst, so werden zumindest einige Warnungen, die ansonsten ausgegeben würden, nunmehr unterdrückt. Eine Unterdrückung wird dadurch erreicht, dass Warnschwellen heraufgesetzt werden und damit später, also erst bei einer weiteren Geschwindigkeitserhöhung oder bei einem noch weiter verringerten Abstand, gewarnt wird. In einer bevorzugten Ausführungsform ist es auch möglich, die Warnungen gegebenenfalls nur noch teilweise auszugeben. So kann zum Beispiel bei einem Überfahren einer seitlichen Begrenzungslinie, bei einem dichten Auffahren, bei einer starken Beschleunigung sowie bei einem Überschreiten der zulässigen Höchstgeschwindigkeit in dem Fall, dass zuvor ein sportliches Fahren ermittelt worden ist, auf die Ausgabe einer akustischen Warnung verzichtet werden, während dem Fahrer eine optische Warnung nach wie vor, insbesondere in einer Anzeige des Kombiinstrumentes vor dem Fahrer, noch angezeigt wird.

Ferner ist es auch möglich, aus den erfassten Zuständen des Fahrzeugs in einem vorgegebenen Zeitraum vor dem Bewertungszeitpunkt ein Fahrverhalten des Fahrers zu ermitteln und mit einem in dem Nutzerprofil abgelegten Fahrverhalten zu vergleichen. Hierdurch können Abweichungen des Fahrverhaltens des Fahrers von einem bei ihm üblichen Fahrverhalten ermittelt werden. Liegen derartige Abweichungen vor, so kann eine Anpassung des Nutzerprofils nur temporär für die jeweils vorliegende Fahrt erfolgen. Eine dauerhafte Anpassung des Nutzerprofils erfolgt erst dann, wenn bei mehreren Fahrten hintereinander von dem bisherigen Nutzerprofil abgewichen wird.

Zudem kann auch die Aufmerksamkeit des Fahrers mittels physiologischer Parameter überwacht werden. Wird zum Beispiel ermittelt, dass der Fahrer im Vergleich zu seinen sonstigen körperlichen Reaktionen müde ist, dass er zum Beispiel also eine besonders hohe Lidschlagsfrequenz und/oder eine besonders niedrige Pulsrate zeigt, so werden die sicherheitskritischen Grenzwerte für die Ausgaben von Warnungen herabgesetzt, um den Benutzer möglichst frühzeitig vor Gefahren zu warnen.

Es ist ferner vorteilhaft, insbesondere die Beschleunigungswerte, die Drehzahlwerte und/oder die Abstandswerte zu vorausfahrenden Fahrzeugen zu erfassen und für die Beurteilung des Fahrverhaltens und damit für die Festlegung der Grenzwerte für sicherheitskritische Zustände in einer Rückkopplungseinheit auszuwerten. insbesondere die genannten Größen geben einen Rückschluss darauf, ob ein Fahrer aggressiv oder zurückhaltend fährt. Damit kann auch ein Rückschluss darauf gezogen werden, ob ein Fahrer an Warnungen vor geringfügigen Überschreitungen von festgelegten Grenzwerten sicherheitskritischer Zustände interessiert ist, oder ob er lediglich eine Warnung erhalten will, wenn eine wesentliche Überschreitung eines derartigen Grenzwertes erfasst wird. Die Rückkopplungseinheit kann zudem ein Bedienelement aufweisen, mit dem der Fahrer eine Warnung deaktivieren kann, so dass er der Vorrichtung zur Fahrerwarnung unmittelbar mitteilt, dass er die gerade ausgegebene Warnung für überflüssig hält.

Es ist ferner vorteilhaft, ein Nutzerprofil über eine Schnittstelle an die Vorrichtung zur Fahrerwarnung zu übertragen. Hierdurch können einerseits benutzerabhängige Profile auch durch eine externe Bedieneinheit bequem festgelegt werden, sowie insbesondere in ein neu erworbenes oder extern angemietetes Fahrzeug übertragen werden. Die Festlegung kann zum Beispiel an einem Computer erfolgen. Sie kann gegebenenfalls auch in einer bevorzugt personalisierten Chipkarte einem Fahrer zur Verfügung stehen.

Es ist insbesondere vorteilhaft, eine Bedieneinheit zur Auswahl oder zur Festlegung eines neuen Benutzerprofils vorzusehen, um einem Benutzer eine individuelle Anpassung seines Benutzerprofils zu ermöglichen. Hierbei ist es insbesondere vorteilhaft, für verschiedene Fahrer, die ein Fahrzeug benutzen, auch personalisiert verschiedene Nutzerprofile zu speichern.

Ferner ist es vorteilhaft, die Vorrichtung zur Fahrerwarnung über einen Datenbus mit einer Vielzahl von Sensoren im Fahrzeug zur Überwachung des Fahrzeugs und des Fahrers zu verknüpfen. Durch die Datenbusübertragung ist eine sichere sowie schnell und einfach auswertbare Datenübertragung an eine Recheneinheit der Vorrichtung zur Fahrerüberwachung möglich.

Es ist ferner vorteilhaft, das Nutzerprofil in Abhängigkeit von den Reaktionen des Fahrers anzupassen, so dass es auf Änderungen des Fahrstils des Fahrers reagieren kann und gegebenenfalls Warnungen dann nicht mehr oder nur noch in eingeschränkter Weise, zum Beispiel ausschließlich optisch, an den Fahrer auszugeben.

### Zeichnung

Ausführungsbeispiele der Erfindung sind in der Zeichnung dargestellt und in der nachfolgenden Beschreibung näher erläutert.

Es zeigen
- Figur 1: ein Ausführungsbeispiel für eine erfindungsgemäße Vorrichtung zur Fahrerwarnung,
- Figur 2: an einen Datenbus angeschlossene Sensoren zur Ermittlung von Zuständen des Fahrzeugs und des Fahrers,
- Figur 3: ein Ausführungsbeispiel für eine Festlegung für Grenzwerte für den sicherheitskritischen Zustand bei einem Abstand zu einem vorausfahrenden Fahrzeug,
- Figur 4: ein Ausführungsbeispiel für einen erfindungsgemäßen Verfahrensablauf.

### Beschreibung des Ausführungsbeispiels

Die vorliegende Erfindung kann für beliebige Fahrzeuge verwendet werden. Im Folgenden ist die Erfindung am Beispiel einer Vorrichtung zur Fahrerwarnung für ein Kraftfahrzeug erläutert.

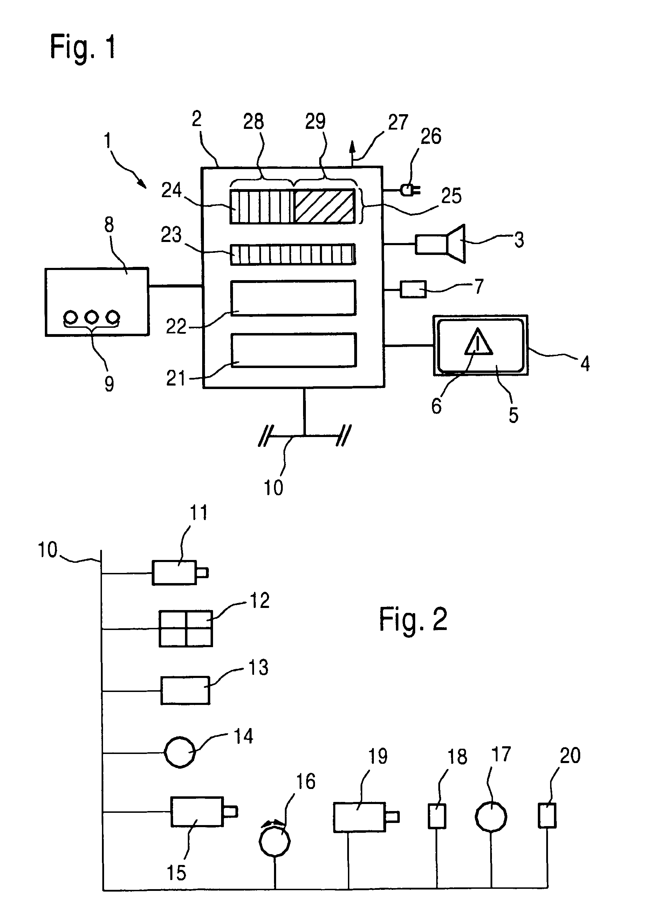

In der Figur 1 ist eine Vorrichtung zur Fahrerwarnung 1 dargestellt, bei der an eine Zentraleinheit 2 ein Lautsprecher 3 und eine Anzeige 4 angeschlossen sind. Über den Lautsprecher 3 können Signaltöne zur Fahrerwarnung ausgegeben werden. In der Anzeige 4, die zum Beispiel in einem Kombiinstrument oder in einer Mittelkonsole des Kraftfahrzeugs angeordnet ist, ist eine Anzeigefläche 5 vorgesehen, die insbesondere zur Darstellung von Warnsymbolen 6 oder von Warnungen in textueller Form dient. Ferner kann ein haptisches Warnelement 7 mit der Zentraleinheit verbunden sein, das zum Beispiel durch motorische Erschütterungen eine Warnung an den Fahrer des Fahrzeugs ausgibt. Zum Beispiel kann das Lenkrad oder der Fahrersitz hierzu in Vibrationen versetzt werden, um den Fahrer auf eine mögliche Gefahr hinzuweisen. Die Zentraleinheit 2 ist ferner mit einer Bedieneinheit 8 verbunden, die der Steuerung der Vorrichtung zur Fahrerwarnung 1 dient. Die Bedieneinheit 8 weist entsprechende Bedienelemente 9 auf, die zum Beispiel als Drucktasten oder als Drehtasten ausgeführt sind. Die Bedieneinheit 8 wirkt in bevorzugter Weise mit der Anzeige 4 derart zusammen, dass eine Mcnüauswahl zur Steuerung der Vorrichtung zur Fahrerwarnung 1 in der Anzeige 4 über die Bedienelemente 9 gesteuert werden kann. Ferner sind der Zentraleinheit 2 über einen Datenbus 10 Informationen von Fahrzeugsensoren zuführbar, die in einer bevorzugten Ausführungsform den Fahrer und das Fahrzeug überwachen. In weiteren Ausführungsformen ist es auch möglich, dass entweder nur der Fahrer oder nur das Fahrzeug überwacht wird. Eine Überwachung des Fahrzeugs wird dabei in der Weise verstanden, dass nicht nur Größen des Fahrzeugs selbst, wie zum Beispiel Motorbetriebsgrößen, Geschwindigkeiten, Beschleunigung und Geschwindigkeit, erfasst werden, sondern auch auf die Umgebung des Fahrzeugs bezogene Daten erfasst werden. Dies können zum Beispiel über Verkehrsschilder oder über externe Dienstezentralen übermittelte Informationen sein, die den Straßenzustand und zum Beispiel die erlaubte Höchstgeschwindigkeit betreffen. Ferner ist in einer bevorzugten Ausführungsform hierunter auch der Abstand zu benachbarten Fahrzeugen oder die Erfassung von vor dem Fahrzeug liegenden Hindernissen zu verstehen.

In der Figur 2 sind die einzelnen Sensoren erläutert, deren Daten über den Datenbus 10 an die Zentraleinheit 2 übertragen werden. In einer weiteren Ausführungsform ist es auch - insbesondere bei hochdynamischen Messwerten - möglich, den Datenbus 10 durch einzelne Anschlüsse zu ersetzen, bei denen die Sensoren oder Gruppen von Sensoren unmittelbar mit der Zentraleinheit 2 verbunden sind, ohne dass ihre Daten über den Datenbus geleitet werden. Der Datenbus 10 ermöglicht jedoch eine einfache Abfrage der verschiedenen Sensoren.

Im Folgenden ist eine bevorzugte Konfiguration von Sensoren beschrieben, die der Erfassung von Zuständen des Fahrzeugs und des Fahrers dienen. Es ist hierbei nicht erforderlich, jeden der Sensoren für einen erfindungsgemäßen Betrieb an den Datenbus 10 anzuschließen. Es können entsprechend auch nur einige der Sensoren verwendet werden. Ferner können auch noch zusätzliche Sensoren, die anhand der Figur 2 nicht erläutert sind, an den Datenbus 10 angeschlossen werden.

Eine erste Kamera 11 ist zur Überwachung des Fahrers vorgesehen. Insbesondere wird eine Lidschlagsfrequenz und/oder eine Blickrichtung des Fahrers überwacht. Wird das Schließen der Augen und/oder eine zu hohe Lidschlagsfrequenz detektiert, so wird eine niedrige Aufmerksamkeit des Fahrers detektiert, der möglicherweise müde ist. Ferner sind Beschleunigungssensoren 12 an den Datenbus 10 angeschlossen, die sowohl eine Längsbeschleunigung, eine seitliche Beschleunigung und/oder eine Drehbeschleunigung erfassen können. Gegebenenfalls kann auch die Ableitung der Beschleunigung, also die Beschleunigungsänderung, ausgewertet werden. Werden hohe Beschleunigungswerte erfasst, so ist davon auszugehen, dass der Fahrer sehr stark Gas gibt oder sehr stark bremst. Werden entsprechend hohe Beschleunigungswerte erfasst, so ist es wahrscheinlich, dass der Fahrer einen aggressiven Fahrstil verfolgt, der mit hohen Geschwindigkeitsänderungen verbunden ist. Ferner ist eine Pedalauswertungseinheit 13 vorgesehen, die einen Druck auf das Gaspedal und eine Häufigkeit der Pedalbedienung erfasst. Wird ein hoher Druck auf das Gaspedal und/oder eine häufige, erneute Bedienung des Pedals erfasst, so spricht dies ebenfalls für eine sportliche Fahrweise des Fahrers. Ein Geschwindigkeitsmesser 14 dient der Ermittlung der Fahrzeuggeschwindigkeit.

Ein Abstandssensor 15, der insbesondere als ein Radarsensor ausgeführt ist, dient dazu, den Abstand des Fahrzeugs zu einem vorausfahrenden Fahrzeug zu bestimmen. Ein Lenkwinkelsensor 16 dient zur Erfassung des Lenkwinkels und/oder zur Erfassung der Lenkwinkeländerung. Über einen Drehzahlmesser 17 ist eine Motordrehzahl erfassbar. Ein Temperaturfühler 18 dient zur Erfassung der Kühlwassertemperatur. Eine zweite Kamera 19 beobachtet den vor dem Fahrzeug liegenden Fahrraum und erfasst, wenn eine seitliche Begrenzung der Fahrspur überfahren wird. Ein Verbrauchsmesser 20 erfasst die von dem Motor des Fahrzeugs aktuell verbrauchte Kraftstoffmenge.

Einige dieser Sensoren dienen der Erfassung sicherheitskritischer Zustände. Die erste Kamera 11 dient der Erfassung, ob der Fahrer wach ist, oder nicht. Die Beschleunigungssensoren 12 dienen der Erfassung, ob zulässige Beschleunigungs- und Drehwerte überschritten werden oder nicht. Die Geschwindigkeitsmessung dient der Überwachung, ob eine zulässige Höchstgeschwindigkeit eingehalten wird, insofern entsprechende Geschwindigkeitsinformationen, zum Beispiel über eine Funkschnittstelle der Zentraleinheit 2, zur Verfügung gestellt werden. Die Abstandsmessung dient der Erfassung des Abstandes zu einem vorausgehenden Fahrzeug, dessen Unterschreiten ebenfalls ein kritisches Risiko für das Fahrzeug bedeuten kann. Die Spurverlassenswarnung erfasst entsprechend das Verlassen einer Fahrspur. Die übrigen Fahrzeug- und Fahrerzustände werden, sofern sie nicht für eine Anzeige an sich erfasst werden, zur Bestimmung des Fahrerverhaltens miterfasst und gegebenenfalls auch zu einer Plausibilitätskontrolle ausgewertet. Kommt es z.B. bei recht niedriger Fahrzeuggeschwindigkeit zu häufigen Pedalbedienungen und zu starken Lenkeinschlägen, so liegt wahrscheinlich kein aggressives Fahrverhalten des Fahrers vor, sondern das Fahrzeug befährt möglicherweise eine Bergstrecke, die ein häufiges Eingreifen des Fahrers erfordert, ohne dass hohe Fahrzeuggeschwindigkeiten erreicht werden können.

Ferner kann auch die Anzahl und die Heftigkeil von Bremsmanövern erfasst werden. Hierzu kann zum Beispiel ausgewertet werden, ob es erforderlich war, dass das ABS (Anti-Blockier-System) aktiv in den Bremsvorgang eingegriffen hat. Ferner ist hierzu auch möglich, auszuwerten, ob eine Traktionskontrolle oder eine elektronische Schleuderkontrolle (ESP) in das Fahrverhalten des Fahrzeugs eingreifen musste.

Die über den Datenbus 10 von den Sensoren 11, ..., 20 erfassten Messgrößen werden in einen ersten Speicher 21 der Zentraleinheit 2 übertragen und dort gegebenenfalls mit ihrem zeitlichen Verlauf über einen vorgegebenen Zeitraum, zum Beispiel 15 Minuten, abgelegt. Gegebenenfalls kann auch nur der aktuell erfasste Wert gespeichert werden. Die Zentraleinheit 2 weist ferner eine Recheneinheit 22 auf, die die aktuell erfassten, sicherheitsrelevanten Größen mit Grenzwerten vergleicht, die in einem zweiten Speicher 23 der Zentraleinheit 2 abgelegt sind. In einer bevorzugten Ausgestaltung sind diese Grenzwerte durch den Fahrzeughersteller vorgegeben. Die Recheneinheit 22 vergleicht die in dem ersten Speicher 21 abgelegten Messwerte mit den in dem zweiten Speicher 23 abgelegten Messwerten. Ferner wird in den Vergleich ein in einem dritten Speicher 24 abgelegtes Nutzerprofil 25 mit einbezogen. Die in dem zweiten Speicher 23 abgelegten Grenzwerte und/oder das Nutzerprofil 25 können der Zentraleinheit 2 in einem ersten Ausführungsbeispiel über eine Steckerschnittstelle 26 zugeführt werden. Ferner ist es auch möglich, dass die Zentraleinheit 2 eine Funkschnittstelle 27 aufweist, über die die entsprechenden Daten an die Zentraleinheit 2 übermittelt werden können. In einer bevorzugten Ausführungsform weist das Nutzerprofil 25 einen ersten Bereich 28 auf, in dem Grenzwerte für sicherheitskritische Zustände des Fahrzeugs und/oder des Fahrers gespeichert sind. In einem zweiten Bereich 29 sind Fahrzustände gespeichert, die das Fahrverhalten des Fahrers charakterisieren. So ist zum Beispiel ein Grenzwert für die Motordrehzahl gespeichert, die von dem Fahrer im allgemeinen nicht überschritten wird. Ferner ist ein Wert für einen Kraftstoffverbrauch gespeichert, der über einen Zeitraum von zum Beispiel 15 Minuten im Durchschnitt nicht überschritten wird Ferner sind Grenzwerte für eine Lenkgeschwindigkeit oder eine Häufigkeit für die Betätigung des Gaspedals gespeichert, die ebenfalls von dem Fahrer im Allgemeinen nicht überschritten werden. Auch können für sicherheitskritische Größen entsprechende, üblicherweise von dem Fahrer eingehaltene Werte, wie eine übliche Durchschnittsgeschwindigkeit, ein üblicher durchschnittlicher Abstand zu einem vorausfahrenden Fahrzeug und/oder eine maximale Fahrzeugbeschleunigung gespeichert sein.

In einer bevorzugten Ausführungsform ist ein derartiges Nutzerprofil 25 für verschiedene Fahrer abgelegt. Bei einem Start einer Fahrt mit dem Fahrzeug kann ein Fahrer sich über die Bedieneinheit 8 identifizieren, so dass das für ihn gespeicherte Nutzerprofil 25 berücksichtigt wird. Benutzt ein Fahrer zum ersten Mal das Fahrzeug, so ist bevorzugt bereits ein Standard-Nutzerprofil festgelegt, das der neue Fahrer nutzen kann. Die Daten in dem Nutzerprofil können auch manuell über die Bedienelemente 9 der Bedieneinheit 8 in die Zentraleinheit 2 eingegeben werden.

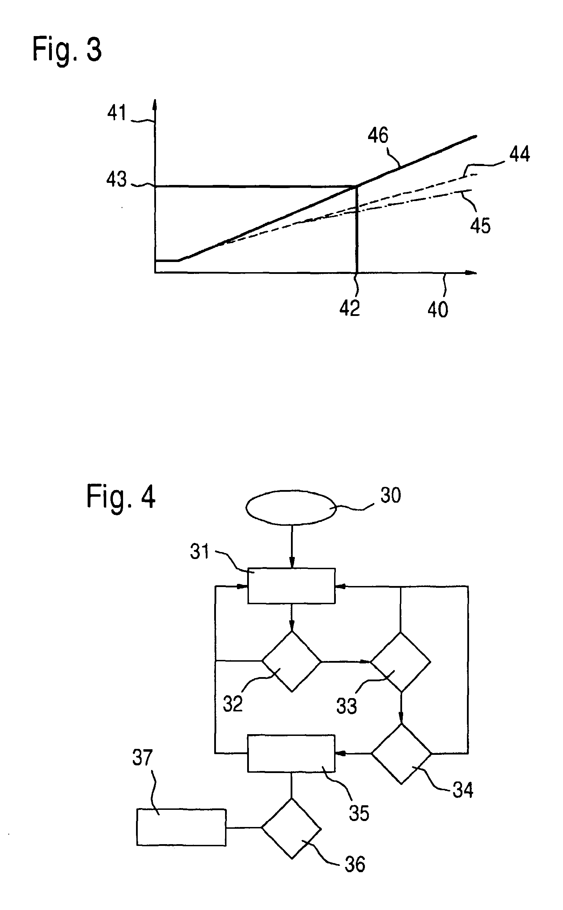

Anhand der Figur 4 ist nun ein erfindungsgemäßer Verfahrensablauf für den Betrieb der erfindungsgemäßen Vorrichtung zur Fahrerwarnung erläutert. Ausgehend von einem Startschritt 30, zum Beispiel von einem Start des Fahrzeugs, wird zu einem Messungsschritt 31 verzweigt. In dem Messungsschritt 31 messen die anhand der Figur 2 erläuterten Sensoren 11, ..., 20 die Fahrzeug- und Fahrergrößen. Die ermittelten Messwerte werden über den Datenbus 10 in den ersten Speicher 21 der Zentraleinheit 2 übertragen. An den ersten Messungsschritt 31 schließt sich ein erster Prüfschritt 32 an, in dem die Recheneinheit 22 die in dem ersten Speicher 21 abgelegten Messwerte mit den in dem zweiten Speicher 23 abgelegten Grenzwerte für sicherheitskritische Zustände vergleicht. Liegen alle Messwerte unterhalb einer Grenze für einen sicherheitskritischen Zustand, so wird zu dem Messungsschritt 31 zurückverzweigt und die Messung wird fortgesetzt. Der Ausdruck "unterhalb" ist hierbei so zu verstehen, dass die Messwerte in einem Bereich liegen, in denen keine Warnung gemäß den in dem zweiten Speicher 23 abgelegten Grenzwerten erfolgen soll. Während zum Beispiel bei einer Geschwindigkeitsüberschreitung mit einem Grenzwert von zum Beispiel 50 km/h eine Überschreitung des Grenzwertes mit einer größeren Fahrzeuggeschwindigkeit einhergeht, erfolgt bei einem zu geringen Abstand eine Überschreitung des Grenzwerts erst dann, wenn der gemessene Abstand kleiner als der gespeicherte Grenzwert wird. Ist der Abstand größer, befindet sich der Messwert in einem Bereich, in dem keine Warnung ausgegeben werden soll.

Wird in dem ersten Prüfschritt 32 ein Überschreiten mindestens eines Grenzwertes ermittelt, so wird zu einem zweiten Prüfschritt 33 verzweigt. In dem zweiten Prüfschritt 33 wird überprüft, ob zu dem überschrittenen Messwert ein korrespondierender Grenzwert in dem ersten Bereich 28 des Nutzerprofils existiert. Liegt der ermittelte Messwert nun über dem Grenzwert in dem zweiten Speicher 23, jedoch unter dem Grenzwert in dem ersten Bereich 28 des Nutzerprofils 25, so wird zu dem Messungsschritt 31 zurückverzweigt, ohne dass eine Warnung ausgegeben wird. Liegt der ermittelte Grenzwert über dem in dem ersten Bereich 28 festgelegten Grenzwert oder ist kein derartiger Grenzwert festgelegt, so wird zu einem dritten Prüfschritt 34 verzweigt. Gegebenenfalls kann noch vor dem zweiten Prüfschritt 33 oder noch vor dem dritten Prüfschritt 34 in diesem Fall bereits eine rein optische Warnung in der Anzeige 4, gegebenenfalls nicht in einem zentralen, sondern in einem peripheren Bereich der Anzeige ausgegeben werden. In dem dritten Prüfschritt 34 wird überprüft, ob derzeit ein besonders zügiges oder sportliches Fahren des Fahrers festgestellt wird. In einer bevorzugten Ausführungsform werden hierzu die Kriterien der Gaspedalberührung, des Gaspedaldrucks, des Benzinverbrauchs, der Längsbeschleunigung und des Überfahrens von Fahrbahnmarkierungslinicn erfasst. Für jedes dieser Kriterien sind Grenzwerte in dem zweiten Bereich 29 des Nutzerprofils abgelegt. Zum Beispiel könnten dies folgende Grenzwerte sein:
Berührungsrate des Gaspedals im Sinne von Loslassen und erneuter Berührung von mehr als 1/10 Hertz,
Gaspedal in einer Minute mehr als dreimal voll durchgedrückt,
Beschleunigung von mehr als 2 m/sec²,
Benzinverbrauch von mehr als 10 Liter pro hundert Kilometer in einem Durchschnittszeitraum von 10 Minuten,
Be- oder Überfahren einer Fahrbahnmarkierung von mehr als einmal pro Minute.

Werden mindestens zwei dieser Kriterien erreicht, so wird ein sportlicher Fahrstil des Fahrers festgestellt. Für diesen Fall ist in dem zweiten Bereich 29 des Nutzerprofils 25 ein weiterer Grenzwert abgelegt. Wird dieser Grenzwert nicht überschritten, so wird zu dem Messungsschritt 31 zurückverzweigt, ohne dass eine Warnung ausgegeben wird. Wird allerdings auch dieser Grenzwert überschritten, so wird zu einem anschließenden Warnschritt 35 verzweigt, in dem eine Warnung an den Fahrer optisch, akustisch und/oder haptisch ausgegeben wird. Anschließend wird ebenfalls zu dem Messungsschritt 31 zurückverzweigt. Ausgehend von dem Warnschritt 35 wird nach einem vorgegebenen Zeitraum in einem vierten Prüfschritt 36 überprüft, ob der überschrittene Messwert immer noch überschritten ist. Ist dies nicht mehr der Fall, so ist die Warnung beachtet worden und die weitere Ausgabe einer Warnung ist nicht erforderlich. Wird der Grenzwert jedoch noch überschritten, so wird in einem Korrekturschritt 37 der entsprechende Grenzwert um einen vorgegebenen Prozentsatz, zum Beispiel um 2%, erhöht, bzw. bei fallenden Grenzwerten, wie zum Beispiel einem Mindestabstand, entsprechend verringert. Hierdurch erfolgt eine Adaption des Nutzerprofils, so dass zukünftig Warnungen unterbleiben. Vor einem Abschalten des Fahrzeugs wird in der Anzeige 4 auf die vorgenommene Adaption hingewiesen. Bestätigt der Fahrer eine Speicherung, so wird die Adaption auch für nachfolgende Fahrten gespeichert. Wünscht der Benutzer keine Speicherung, stehen ab der nächsten Fahrt wieder die in dem zuvor gespeichert vorliegenden Nutzerprofil festgelegten Werte zur Verfügung.

In der Figur 3 ist ein Ausführungsbeispiel für Grenzwerte eines sicherheitskritischen Zustands am Beispiel eines Abstands zu einem vorausgehenden Fahrzeug dargestellt. Auf der X-Achse 40 ist die Fahrzeuggeschwindigkeit aufgetragen. Auf der Y-Achse 41 ist der Abstand aufgetragen, bei dessen Unterschreitung eine Warnung vor einem vorherfahrenden Fahrzeug erfolgt. Hieraus wird deutlich, dass unter dem Ausdruck "Grenzwert" nicht lediglich konstante Grenzen zu verstehen sind, sondern auch Kurven, bei denen die Grenze in Abhängigkeit von einem weiteren Parameter definiert ist. Beispielhaft ist in der Figur 3 ein Punkt hervorgehoben, wobei bei einer Geschwindigkeit von 100 km/h, die durch das Bezugszeichen 42 gekennzeichnet ist, eine Warnung bei einer Unterschreitung eines Abstandes von 53 Metern erfolgt, wobei der Wert von 53 Metern durch das Bezugszeichen 43 bezeichnet ist. Ausgehend von diesem Punkt in Richtung des Ursprungs verläuft eine von einem Hersteller vorgegebene Warnkurve 46 vor der Unterschreitung eines mindestens einzuhaltenden Abstandes im Wesentlichen linear. Unterhalb dieser Kurve ist eine erste Grenzwertkurve 44 eingetragen, die auf den Fahrer bezogen ist und die bei der Geschwindigkeit von 100 km/h (42) eine Warnung bei einer Unterschreitung eines Mindestabstandes von 48 Metern vorsieht. Wird nun mittels Vergleichs der Fahrzeugzustände mit den in dem zweiten Bereich 29 des Nutzerprofils abgelegten Grenzwerten ein sportliches bzw. zügiges Fahren des Fahrers, das im Allgemeinen mit einer hohen Aufmerksamkeit verbunden ist, festgestellt, so wird eine Warnung erst bei einer Unterschreitung der zweiten Grenzwertkurve 45 ausgegeben. Dies wäre zum Beispiel bei der Geschwindigkeit von 100 km/h eine Warnung erst bei einer Unterschreitung eines Abstandes von 45 Metern zu einem vorausfahrenden Fahrzeug. In einer weiteren Ausführungsform ist es auch möglich, als entsprechende Abstandsgrenzen eine Geschwindigkeit von 100 km/h die Abstände von 50, 40 und 35 Metern jeweils für die Warnkurve 46, die erste Grenzwertkurve 44 und die zweite Grenzwertkurve 45 vorzusehen.

Die Grenzwerte in dem zweiten Speicher 23 können auch durch die Grenzwerte in dem ersten Bereich 28 des Nutzerprofils überschrieben werden. Damit ist es auch möglich, dass ein Benutzer sich selbst Grenzwerte für eine Warnung vorgibt, die zu einer frühren Ausgabe einer Warnung führen, als dies vom Fahrzeughersteller vorgesehen wurde. Hierdurch ist es zum Beispiel auch möglich, die Warnausgabe an neue gesetzliche Vorschriften anzupassen. Insbesondere kann auch ein besonders vorsichtiger Fahrer die Konfiguration so verändern, dass er sehr frühzeitig gewarnt wird. Ein Fahrer könnte zum Beispiel eine derartige Abstandskurve vorgegeben, dass bei einer Geschwindigkeit von 100 km/h eine Warnung bereits bei einem Abstand von 60 Metern zu einem vorausfahrenden Fahrzeug ausgegeben wird.

Nicht nur für Fahrzeuggrößen, sondern auch für Parameter, die den Fahrer betreffen, z.B. eine Lidschlagsfrequenz, können entsprechende Grenzwerte vorgegeben sein. Damit wird z. B. eine Müdigkeitserkennung des Fahrers ermöglicht.

## Patentansprüche

1. Vorrichtung zur Fahrerwarnung mit einer Erfassungseinheit zur Erfassung von Zuständen des Fahrzeugs und/oder des Fahrers und mit einer Warneinheit zur Ausgabe von Warnungen an den Fahrer, wenn ein sicherheitskritischer Zustand des Fahrzeugs und/oder des Fahrers erreicht wird, wobei ein Grenzwert (44, 45) für einen sicherheitskritischen Zustand des Fahrzeugs und/oder des Fahrers in Abhängigkeit von einem Nutzerprofil (25) festgelegt wird, **gekennzeichnet durch** eine Rückkopplungseinheit (8, 9, 22) zur Ermittlung einer Fahrerreaktion auf eine Warnung und zur Anpassung des Nutzerprofils in Abhängigkeit davon, ob auf die Warnung reagiert wurde.

2. Vorrichtung nach Anspruch 1, **dadurch gekennzeichnet, dass** Grenzwerte für sicherheitskritische Zustände des Fahrzeugs und/oder des Fahrers in dem Nutzerprofil gespeichert sind.

3. Vorrichtung nach einem der vorherigen Ansprüche, **gekennzeichnet durch** eine Bewertungseinheit (22) zur Festlegung eines sicherheitskritischen Grenzwerts **durch** einen Vergleich von in dem Nutzerprofil abgelegten Zuständen des Fahrzeugs und/oder des Fahrers mit in einem vorgegebenen Zeitraum vor dem Bewertungszeitpunkt erfassten Zuständen des Fahrzeugs und/oder des Fahrers.

4. Vorrichtung nach Anspruch 3, **dadurch gekennzeichnet, dass** für den Fall, dass in dem vorgegebenen Zeitraum Beschleunigungswerte und/oder Drehzahlwerte des Fahrzeugs erfasst werden, die über einer vorgegebenen Grenze liegen, und/oder dass Abstandswerte zu vorausfahrenden Fahrzeugen erfasst werden, die unter einer vorgegebenen Grenze liegen, ein jeweils zugehöriger sicherheitskritischer Grenzwert erhöht bzw. gesenkt wird

5. Vorrichtung nach einem der vorherigen Ansprüche, **gekennzeichnet durch** eine Schnittstelle (26) zur Zuführung des Nutzerprofils an die Vorrichtung.

6. Vorrichtung nach Anspruch 5, **dadurch gekennzeichnet, dass** die Schnittstelle zum Anschließen einer personalisierten Chipkarte eines Fahrers ausgestaltet ist.

7. Vorrichtung nach einem der vorherigen Ansprüche, **gekennzeichnet durch** eine Bedieneinheit (8) zur Auswahl eines gespeicherten Nutzerprofils und/oder zur Festlegung eines neuen Nutzerprofils.

8. Vorrichtung nach einem der vorherigen Ansprüche, **gekennzeichnet durch** eine Speichereinheit (24) zur Speicherung von Nutzerprofilen für verschiedene Fahrer des Fahrzeugs.

9. Vorrichtung nach einem der vorherigen Ansprüche, **dadurch gekennzeichnet, dass** die Vorrichtung über einen Datenbus (10) mit einer Vielzahl von Sensoren zur Erfassung von Zuständen des Fahrzeugs und/oder des Fahrers verbunden ist.

10. Verfahren zur Fahrerwarnung mit einer Erfassungseinheit zur Erfassung von Zuständen des Fahrzeugs und/oder des Fahrers und mit einer Warneinheit zur Ausgabe von Warnungen an den Fahrer, wenn ein sicherheitskritischer Zustand des Fahrzeugs und/oder des Fahrers erreicht wird, wobei ein Grenzwert für einen sicherheitskritischen Zustand in Abhängigkeit von einem gespeicherten Nutzerprofil festgelegt wird, **dadurch gekennzeichnet, dass** über eine Rückkopplungseinheit eine Fahrerreaktion auf eine Warnung ermittelt wird und das Nutzerprofil in Abhängigkeit davon angepasst wird, ob auf die Warnung reagiert wurde.

11. Verfahren nach Anspruch 9, **dadurch gekennzeichnet, dass** das Nutzerprofil in Abhängigkeit von Zuständen des Fahrzeugs und/oder des Fahrers und/oder von einer Eingabe des Fahrers insbesondere zur Deaktivierung von Warnungen angepasst wird.

12. Verfahren nach einem der Ansprüche 10 bis 11, **dadurch gekennzeichnet, dass** als ein Zustand des Fahrers eine Aufmerksamkeit des Fahrers mittels physiologischer Parameter überwacht wird.

## Claims

1. Device for warning the driver of a vehicle, having a sensor unit for sensing states of the vehicle and/or of the driver, and having a warning unit for outputting warnings to the driver if a state of the vehicle and/or of the driver which is critical in terms of safety is reached, wherein a limiting value (44, 45) for a state of the vehicle and/or of the driver which is critical in terms of safety is defined as a function of a user profile (25), **characterized by** a feedback unit (8, 9, 22) for determining a driver's reaction to a warning and for adapting the user profile as a function of whether there has been a reaction to the warning.

2. Device according to Claim 1, **characterized in that** limiting values for states of the vehicle and/or of the driver which are critical in terms of safety are stored in the user profile.

3. Device according to one of the preceding claims, **characterized by** an evaluation unit (22) for defining a limiting value which is critical in terms of safety by means of a comparison of states of the vehicle and/or of the driver which are stored in the user profile with states of the vehicle and/or of the driver which are sensed in a predefined time period before the evaluation time.

4. Device according to Claim 3, **characterized in that** if acceleration values and/or rotational speed values of the vehicle which are above a predefined limit are sensed in the predefined time period, and/or if values for the distance from vehicles travelling ahead which are below a predefined limit are sensed, a respectively associated limiting value which is critical in terms of safety is raised or lowered.

5. Device according to one of the preceding claims, **characterized by** an interface (26) for feeding the user profile to the device.

6. Device according to Claim 5, **characterized in that** the interface is configured for the connection of a personalized chip card of a driver.

7. Device according to one of the preceding claims, **characterized by** an operator control unit (8) for selecting a stored user profile and/or for defining a new user profile.

8. Device according to one of the preceding claims, **characterized by** a memory unit (24) for storing user profiles for various drivers of the vehicle.

9. Device according to one of the preceding claims, **characterized in that** the device is connected via a data bus (10) to a plurality of sensors for sensing states of the vehicle and/or of the driver.

10. Method for warning the driver of a vehicle, having a sensor unit for sensing states of the vehicle and/or of the driver, and having a warning unit for outputting warnings to the driver if a state of the vehicle and/or of the driver which is critical in terms of safety is reached, wherein a limiting value for a state which is critical in terms of safety is defined as a function of a stored user profile, **characterized in that** a feedback unit is used for determining a driver's reaction to a warning and the user profile is adapted as a function of whether there has been a reaction to the warning.

11. Method according to Claim 9, **characterized in that** the user profile is adapted as a function of states of the vehicle and/or of the driver and/or of an input by the driver, in particular for the deactivation of warnings.

12. Method according to one of Claims 10 to 11, **characterized in that** attentiveness of the driver is monitored as a state of the driver by means of physiological parameters.

## Revendications

1. Dispositif d'avertissement du conducteur d'un véhicule comportant une unité de saisie pour saisir les états du véhicule et/ou du conducteur ainsi qu'une unité d'avertissement pour émettre des signaux d'avertissement à destination du conducteur lorsqu'on atteind un état du véhicule et/ou du conducteur, critique, pour la sécurité,
selon lequel
pour un état du véhicule et/ ou du conducteur, on fixe une valeur limite (44, 45) critique pour la sécurité, en fonction d'un profil d'utilisateur (25)
**caractérisé par**
une unité de réaction (8, 9, 20) pour déterminer une réaction du conducteur à la suite d'un signal d'avertissement et pour adapter le profil d'utilisateur en fonction de la réaction au signal d'avertissement.

2. Dispositif selon la revendication 1,
**caractérisé en ce qu'**
on mémorise les valeurs limite pour les états du véhicule et/ou du conducteur, critiques pour la sécurité, dans le profil d'utilisateur.

3. Dispositif selon l'une des revendications précédentes,
**caractérisé par**
une unité d'évaluation (22) pour fixer une valeur limite critique sur le plan de la sécurité par la comparaison des états du véhicule et/ou du conducteur enregistrés dans le profil d'utilisateur et les états du véhicule et/ou du conducteur saisis dans une période prédéfinie avant l'instant de l'évaluation.

4. Dispositif selon la revendication 3,
**caractérisé en ce qu'**
au cas où la saisie des valeurs d'accélération et/ou des valeurs de vitesse de rotation du véhicule dans la période prédéfinie, et qui dépassent une limite prédéfinie et/ou que l'on saisit la distance par rapport à des véhicules en amont, qui se situe en dessous d'une limite prédéfinie, on augmente ou on abaisse une valeur limite respective, critique pour la sécurité.

5. Dispositif selon l'une des revendications précédentes,
**caractérisé par**
une interface (26) pour fournir le profil d'utilisateur au dispositif.

6. Dispositif selon la revendication 5,
**caractérisé en ce que**
l'interface est conçue pour relier une carte à puce personnalisée d'un conducteur.

7. Dispositif selon l'une des revendications précédentes,
**caractérisé par**
une unité de service (8) pour sélectionner un profil d'utilisateur mémorisé et/ ou pour fixer un nouveau profil d'utilisateur.

8. Dispositif selon l'une des revendications précédentes,
**caractérisé par**
une unité de sécurité (24) pour mémoriser des profils d'utilisateur pour différents conducteurs du véhicule.

9. Dispositif selon l'une des revendications précédentes,
**caractérisé en ce que**
le dispositif est relié par un bus de données (10) à plusieurs capteurs pour saisir les états du véhicule et/ou du conducteur.

10. Procédé d'avertissement du conducteur à l'aide d'une unité de saisie servant à saisir les états de véhicule et/ou du conducteur, ainsi qu'une unité d'avertissement pour émettre des signaux d'avertissement pour le conducteur lorsqu'on atteint un état du conducteur et/ou du véhicule, critique pour la sécurité, la valeur limite d'un état critique pour la sécurité, étant fixé en fonction d'un profil d'utilisateur enregistré en mémoire,
**caractérisé en ce qu'**
une unité de réaction détermine une réaction du conducteur à un signal d'avertissement et le profil d'utilisateur est adapté en fonction de ce signal indiquant s'il a réagi au signal d'avertissement.

11. Procédé selon la revendication 9,
**caractérisé en ce que**
le profil d'utilisateur est adapté en fonction des états du véhicule et/ou du conducteur et/ou d'une entrée du conducteur notamment pour neutraliser les signaux d'avertissement.

12. Procédé selon l'une des revendications 10 à 11,
**caractérisé en ce qu'**
on surveille l'état du conducteur correspondant à son attention, par des paramètres physiologiques.
